Europäisches Patentamt

European Patent Office

Office européen des brevets

(19)

(11) **EP 1 324 283 A1**

(12) **EUROPEAN PATENT APPLICATION**

(43) Date of publication:
**02.07.2003 Bulletin 2003/27**

(51) Int Cl.⁷: **G07D 7/12**

(21) Application number: **02027675.4**

(22) Date of filing: **12.12.2002**

(84) Designated Contracting States:
**AT BE BG CH CY CZ DE DK EE ES FI FR GB GR
IE IT LI LU MC NL PT SE SI SK TR**
Designated Extension States:
**AL LT LV MK RO**

(30) Priority: **13.12.2001 JP 2001379374**

(71) Applicant: **Omron Corporation
Kyoto-shi, Kyoto 600-8530 (JP)**

(72) Inventors:
• **Yamada, Masaki, Omron Corp.,
801, Minamifudodo-cho
Shimogyo-ku, Kyoto-shi, Kyoto 600-8530 (JP)**

• **Toda, Kinya, Omron Corp.,
801, Minamifudodo-cho
Shimogyo-ku, Kyoto-shi, Kyoto 600-8530 (JP)**
• **Hamasaki, Toshiya, Omron Corp,
801Minamifudodo-cho
Shimogyo-ku, Kyoto-shi, Kyoto 600-8530 (JP)**
• **Fuji, Toru, Omron Corp., 801, Minamifudodo-cho
Shimogyo-ku, Kyoto-shi, Kyoto 600-8530 (JP)**

(74) Representative: **Käck, Jürgen
Kahler Käck Mollekopf
Patentanwälte
Vorderer Anger 239
86899 Landsberg (DE)**

(54) **Document authenticity discriminating apparatus and method therefor**

(57)   The present invention has its object to provide a document authenticity discriminating apparatus (11), in which authenticity can be discriminated with high accuracy at the time of discriminating authenticity of a presented document (17) by acquiring picture images making use of a wavelength characteristic with respect to transmissivity and reflectance of light, and subjecting the acquired picture images to numeric conversion to find feature quantities, and a document authenticity discriminating method. The present invention is characterized by making use of a wavelength characteristic for a document (17) with respect to transmissivity and reflectance of light, extracting feature quantities, in which wavelength characteristic is subjected to numeric conversion, on the basis of picture images of the document picked up by light sources (15, 16) having a plurality of wavelengths, and discriminating authenticity of the document from the feature quantities.

*Fig. 2*

11: DOCUMENT AUTHENTICITY DISCRIMINATING APPARATUS
15: LIGHT SOURCE FOR TRANSMISSION
16: LIGHT SOURCE FOR REFLECTION
17: LICENSE
19: CCD CAMERA

EP 1 324 283 A1

**Description**

BACKGROUND OF THE INVENTION

1. Field of the Invention

The invention relates to a document authenticity discriminating apparatus for verifying and discriminating a document, for example, identification cards, licenses, or the like, and more particularly, to a document authenticity discriminating apparatus having a high discriminating function of correctly reading information of a genuine degree of a document to discriminate authenticity, and a document authenticity discriminating method.

2. Description of Related Art

Generally, a document authenticity discriminating apparatus of this type is assembled into, for example, an automatic contracting machine, to optically read, verify and discriminate contents of a document, for example, an identification card, or the like, presented by a user.
In this case, when authenticity of a document is to be discriminated, the document is photographed by visible rays, and an operator inspects the photographed picture data to judge whether the document is genuine or false.
In recent years, however, such documents are easily forged by means of a color duplicator, a printer, or the like, having possessed high-performance with the technical progress of OA equipment, so that dishonesty becomes liable to be committed because elaborate duplication can be made to the extent that no distinction is recognized between a genuine document and a forged document.
In order to prevent such dishonesty, there has been a demand for development of document authenticity discriminating apparatuses having a discriminating function with high accuracy.
Therefore, a sheet-like item identifying apparatus (see, for example, JP-A-6-44437) has been exemplarily known to extract feature data from grayscale pictures in full screen read every one of a plurality of light sources to make a comparison between a frequency distribution found from the feature data and a reference frequency distribution to identify a kind of and authenticity of a sheet-like item.
Since the sheet-like item is identified from general picture data in this case, however, identification is susceptible to influences of an equipment and a sheet-like item and thus reliability in accuracy of data is decreased.
Also, general verifying and discriminating data for verifying and discriminating sheet-like items are required, which causes a need of much data storage.
Also, a document verifying apparatus (see, for example, JP-A-2001-76203) has been exemplarily known to photograph a document making use of light rays of plural kinds with plural kinds of light sources having different wavelengths to make a comparison between the photographed picture image and a sample picture image to verify a genuine degree.
In this case, there is a need of collecting many forged samples and analyzing them. Also, it is therefore necessary to have much data storage of sample picture images.

SUMMARY OF THE INVENTION

The invention has its object to provide a document authenticity discriminating apparatus, in which distinguishment between a genuine document and a false document can be materialized with high accuracy at the time of discriminating authenticity of a presented document by acquiring a picture image making use of a wavelength characteristic with respect to transmissivity and reflectance of light, and subjecting the acquired picture image to numeric conversion to find a feature quantity, and a document authenticity discriminating method.
The invention provides a document authenticity discriminating apparatus for discriminating authenticity of a document, comprising plural kinds of light sources having different wavelengths, pickup means for receiving at least one of transmitted light produced upon transmission of light from the plural kinds of light sources through the document and reflected light produced upon reflection of the light from the document to pick up the document, calculating means for calculating feature quantities of a plurality of beforehand indicated portions of the document being discriminated, from pickup picture images picked up by light source with the use of the pickup means, storage means for storing feature functions for extraction of genuine degrees found from those reference feature quantities of a reference document, which are calculated by means of the calculating means, and genuine degree extracting means for extracting genuine degrees of the document being discriminated, from the feature quantities of the document being discriminated, calculated by the calculating means, and the feature functions beforehand stored in the storage means.
Here, a document indicates an identification card, a license, a certificate representative of particular information, or the like.

The pickup means can be composed of an optical pickup equipment, for example, CCD cameras, for acquiring a picture image.

The calculating means and the genuine degree extracting means can be composed of a calculating unit of a control system provided in the apparatus and found through calculation with a program incorporated into a RAM or the like, of a control circuit.

The storage means can be composed of a hard disk or a storage device in place thereof, provided in the apparatus, or a storage unit, such as a RAM or the like, provided in a control circuit.

The light source uses a plurality of monochromatic light rays, such as visible rays, infrared rays, and ultraviolet rays, having different wavelengths.

Transmitted light produced when light from the light source is transmitted through a document, or reflected light produced when light from the light source is irradiated on a document to be reflected therefrom is picked up as picture data. For example, a genuine certificate printed by, for example, an exclusive printing machine and a false certificate duplicated by an OA equipment differ in transmissivity and reflectance of light due to differences in ink and quality of documents. Such difference generated gives rise to feature portions where it becomes considerably great according to wavelength due to the wavelength dependence of light.

Hereupon, picture data in such portions are used to enable finding features with respect transmissivity and reflectance, and such features are found and subjected to numeric conversion to define feature quantities. The feature quantities having been subjected to numeric conversion can be represented by a probability that a genuine document can have feature quantities, and feature functions representative of a correspondence to the probability, which is defined as a genuine degree.

The feature functions presents data for calculation of a genuine degree and data of reference feature quantities of a genuine document are beforehand analyzed to be stored. In beforehand setting such genuine degree, respective genuine degrees are found from feature functions found from reference feature quantities every one of a plurality of portions beforehand indicated on a genuine document, and a numeric value obtained by multiplying all the genuine degrees together can be made a final genuine degree of the document.

The genuine degree found through numeric conversion approaches "1 with a genuine document" and "0 with a false document" whenever numerical values are multiplied together in the course of extraction, and so it is possible to correctly discriminate authenticity on the basis of such results of numerical values. In particular, as feature quantities are set for many portions, data for discriminating authenticity is enhanced in accuracy to provide discriminated results of high reliability.

In particular, when being to be found, feature functions are found only from data of a genuine document and unlike existing discriminating techniques in need of many false samples and analysis thereof, it is possible to readily build the authenticity discriminating function.

Also, since an arithmetic processing can be realized using that statistical technique, in which genuine degrees are found from pickup picture images of many genuine document, feature functions are determined from a distribution of the feature quantities of the genuine documents, and genuine degrees are found from the plurality of feature functions thus determined, it is possible to correctly discriminate authenticity of a document under less influence of dispersion in equipment and documents.

Further, since data amount of feature functions being stored in this case is markedly smaller than that of sample picture images used in existing discriminating techniques, storage suffices to be small.

Also, the discriminating performance can be further enhanced by increasing kinds of light sources. In this case, it suffices to find new feature quantities from picture images acquired with the use of additional light sources and set feature functions therefor, and since feature functions are independent of one another, existing feature functions can be made effective use of as they are. Therefore, extendability is facilitated because feature functions can be utilized only by multiplication of numerical values.

Accordingly, labor is not required, in which a way to find feature quantities and reference data should be reset. Besides, independent feature functions can be combined in different patterns, and so it is possible to set various discriminating standards.

The feature quantities are grasped from picture images picked up by pickup means, and found from distribution functions of average values of luminance in a photograph portion or particular portions of characters in the case of, for example, a license, but not found from a luminance distribution in a whole display surface of a license, so that the above effect is produced.

BRIEF DESCRIPTION OF THE DRAWINGS

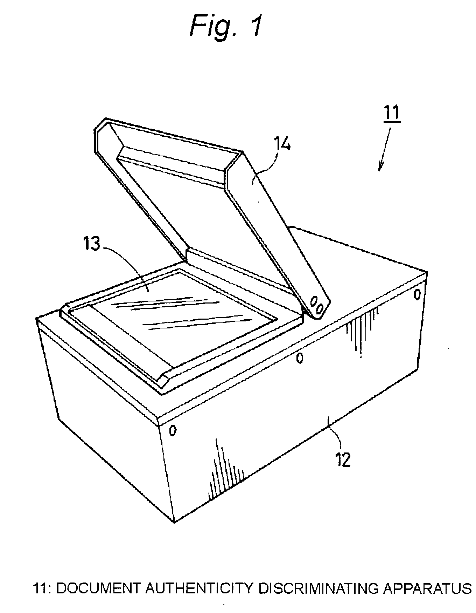

Fig. 1 is a perspective view showing an outward appearance of a document authenticity discriminating apparatus according to the invention.

Fig. 2 is a schematic, configurational view showing the document authenticity discriminating apparatus according to the invention.

Fig. 3 is a schematic, plan view showing a license used in the document authenticity discriminating apparatus according to the invention.

Fig. 4 is a flowchart illustrating an operation of picture image taking-in processing in the document authenticity discriminating apparatus according to the invention.

Fig. 5 is an illustration showing configurational examples of feature functions with infrared rays in the invention.

Fig. 6 is a flowchart illustrating an operation of authenticity discriminating processing in plural kinds of light sources having different wavelengths in the invention.

DESCRIPTION OF THE PREFERRED EMBODIMENTS

An explanation will be given below in detail to an embodiment of the invention with reference to the drawings. The drawings show a document authenticity discriminating apparatus for discriminating authenticity of a document such as a driving license or the like, the document authenticity discriminating apparatus 11 comprising a surface 13 on an upper surface of a rectangular apparatus body 12, on which surface a document, such as a driving license (referred below to as a license) or the like, is placed, and a single swing type movable door 14 provided on the upper surface.

The surface 13 has the picture image acquiring function of optically detecting display data with the use of transmitted light and reflected light to thereby acquire picture image data for discrimination of authenticity of a license.

In order to acquire the picture image, a planar glass surface is provided, a surface of the license is placed thereon with the surface facing downward, and a portion of the surface is set in a picture image acquiring position.

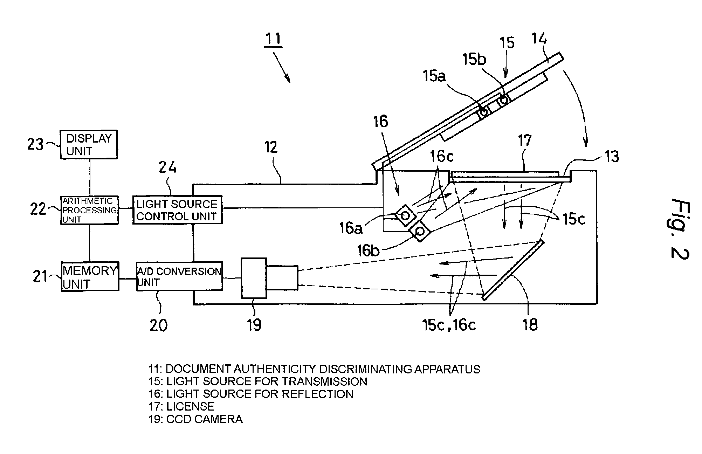

Fig. 2 shows an internal construction of the document authenticity discriminating apparatus 11 having the picture image acquiring function. As a light source used for the document authenticity discriminating apparatus 11, there are used a light source 15 for transmission arranged on an underside of the movable door 14 and a light source 16 for reflection arranged inside of the apparatus body 12.

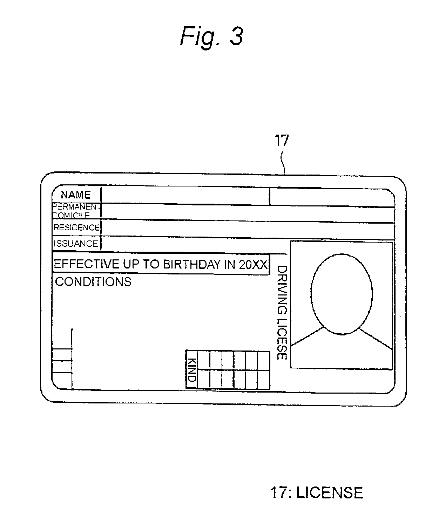

And light from the both light sources is conducted to the surface 13 and a picture image of a license 17 set on the surface 13 in a planar manner as shown in Fig. 3 is partially acquired.

Used for the light source 15 for transmission are two kinds of light emitting diodes 15a, 15b having different wavelengths, which are a light emitting diode 15a for visible rays and a light emitting diode 15b for infrared rays.

At the time of transmission, transmitted light 15c is transmitted directly below from the movable door 14 to be directed toward a front side of the license 17 placed on the surface 13 from a back side thereof.

At this time, the transmitted light 15c transmitted directly below from the license 17 strikes against a reflecting mirror 18 arranged obliquely below the license to be refracted in a horizontal direction from a vertical direction to be changed in a substantially horizontal direction to be conducted to a CCD camera 19 laterally opposed to the mirror. Thus a transmitted picture image having transmitted through the license 17 is acquired.

Meanwhile, used for the light source 16 for reflection are two kinds of light emitting diodes 16a, 16b having different wavelengths, which are a light emitting diode 16a for visible rays and a light emitting diode 16b for infrared rays, in the same manner. At the time of reflection, the reflected light 16c is irradiated from obliquely downward to be directed toward the front side of the license 17 placed on the surface 13.

At this time, the irradiated light irradiated obliquely upward on the license 17 from obliquely downward strikes against the downwardly facing display surface of the license 17 to be reflected substantially directly below. The reflected light 16c strikes against the reflecting mirror 18 arranged obliquely in a lower position to be refracted in a horizontal direction from a vertical direction to be changed in a substantially horizontal direction to be conducted to the CCD camera 19 laterally opposed to the mirror. Thus a reflected picture image reflected from the license 17 is acquired.

A picture signal acquired by the CCD camera 19 is converted into digital data by an A/D (analog/digital) conversion unit 20 to be stored as picture data in a memory unit 21. The picture data is subjected to arithmetic processing in an arithmetic processing unit 22, and then results of arithmetic processing are displayed on a display unit 23. Further, connected to the arithmetic processing unit 22 is a light source control unit 24 to perform control of picture acquisition and quantity of light for the light sources 15, 16.

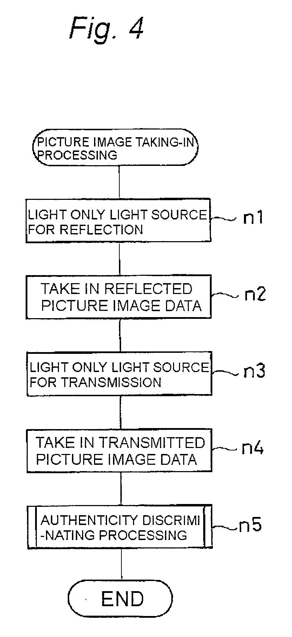

An explanation will be given below to a picture acquiring operation of the document authenticity discriminating apparatus 11 constructed in the above manner with reference to a flowchart shown in Fig. 4.

First, setting by a user is completed by opening the movable door 14 of the document authenticity discriminating apparatus 11, setting the license 17 in a predetermined position on the surface 13 with a photograph surface (front surface) side facing downward, and thereafter closing the movable door 14. After the completion of such setting, when a picture acquisition signal is input, the light source control unit 24 lights only the light source 16 for reflection to permit the CCD camera 19 to acquire a reflected picture image produced by the reflected light 16c reflected on the license 17 (STEPS n1 to n2).

Subsequent to acquisition of the reflected picture image, the light source control unit 24 lights only the light source 15 for transmission to transmit light through the license 17 from above the surface 13. A transmitted picture image produced by the transmitted light 15c is acquired by the CCD camera 19 (STEPs n3 to n4).

After acquisition of the picture image, the arithmetic processing unit 22 discriminates authenticity to determine whether the license is a genuine document or a false document. Results found are displayed on the display unit 23 (STEP n5).

At the time of discriminating authenticity, a feature quantity for discriminating authenticity can be found by acquiring as picture data the transmitted light produced when light from the light source is transmitted through the license 17, or the reflected light produced when light from the light source is reflected from the license 17.

That is, a genuine license 17 printed by an exclusive printing machine and a false license duplicated by an OA equipment differ in transmissivity and reflectance of light due to differences in ink and quality of documents. Further, such difference gives rise to portions where it becomes considerably great according to wavelength due to the wavelength dependence of light.

Hereupon, picture data in such portions are used to enable finding features with respect transmissivity and reflectance, and such features are found and subjected to numeric conversion to define feature quantities. Further, feature quantities having been subjected to numeric conversion can be represented by a probability that a genuine document can have feature quantities, and feature functions representative of a correspondence to the probability, which is defined as a genuine degree.

The feature functions present data for calculation of a genuine degree and data of reference feature quantities of a genuine document are beforehand analyzed to be stored. In beforehand setting such genuine degree, respective genuine degrees are found from feature functions found from reference feature quantities every one of a plurality of portions (photograph portion, character portion, boundary portion, or the like) beforehand indicated on a genuine license 17. A numeric value obtained by multiplying all the genuine degrees together can be made a final genuine degree of the license 17.

The genuine degree found through numeric conversion approaches "1 with a genuine document" and "0 with a false document" whenever numerical values are multiplied together in the course of extraction, and so it is possible to correctly discriminate authenticity on the basis of such results of numerical values. Inparticular, as reference feature quantities are set for many portions, data for discriminating authenticity is enhanced in accuracy to provide discriminated results of high reliability.

In particular, when being to be found, feature functions are found only from data of a genuine license 17 and there is no need of many false samples and analysis thereof, so that it is possible to readily build the authenticity discriminating function.

Subsequently, an explanation will be given to contents of arithmetic processing when authenticity of a license 17 is discriminated. Data providing the basis for such authenticity discriminating processing comprise reflected picture images and transmitted picture images acquired by the CCD camera 19, and feature quantities for portions, in which a genuine document and a false document are different, are extracted from these picture images.

For example, when infrared rays are used in the light source 16 for reflection, concentration differences are in some cases generated as compared with visible rays, so that it is possible to select an average value of luminance in a photograph portion as a feature quantity. And the relationship of a genuine degree with such feature quantity is beforehand found as a feature function.

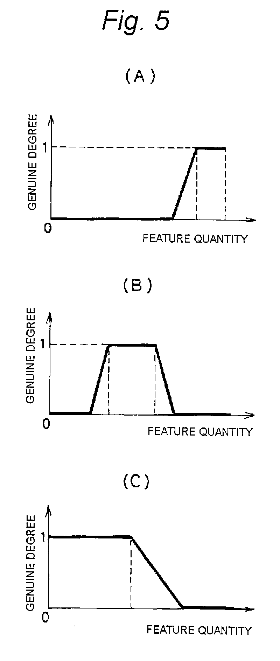

Fig. 5 shows configurational examples represented as typical feature functions. The feature functions can be experimentally found by acquiring data of reference feature quantities of a genuine document.

For example, in the case where a feature quantity is given by an average value of luminance in a photograph portion of a reflected picture image acquired with the use of infrared rays, a feature function assumes a configuration, in which a genuine degree is increased in proportion to an increase in the feature quantity, as shown in Fig. 5A.

Also, in the case where a feature quantity is given by an average value of luminance in a certain region in a transmitted picture image, a feature function assumes a configuration, in which a genuine degree of high accuracy is obtained even when the feature quantity is not large, as shown in Fig. 5B.

Further, in the case where a feature quantity is given by an average value of luminance in a character portion of a reflected picture image acquired with the use of, for example, infrared rays, a feature function assumes a configuration, in which a genuine degree of high accuracy is obtained even when the feature quantity is small, as shown in Fig. 5(C).

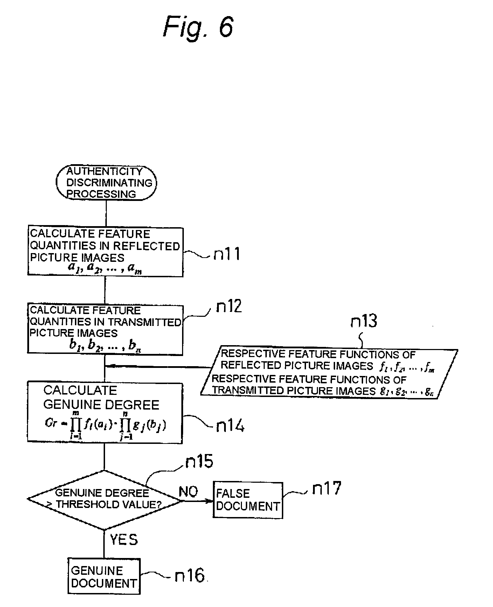

A way to calculate a genuine degree from such feature functions is illustrated as follows. Also, an explanation will be given to an authenticity discriminating operation with calculation of a genuine degree at that time with reference to a flowchart shown in Fig. 6.

In the arithmetic processing unit 22, it is assumed that a1, a2, ..., am denote feature quantities in reflected picture images photographed by a reflected light, such as infrared rays, visible rays, or the like, from a plurality of light sources having different wavelengths and f1, f2, ..., fm denote feature functions corresponding to the respective feature quantities at that time (STEP n11).

Also, it is assumed that b1, b2, ..., bn denote feature quantities in transmitted picture images photographed by a transmitted light, such as infrared rays, visible rays, or the like, from a plurality of light sources having different wavelengths and g1, g2, ..., gn denote feature functions corresponding to the respective feature quantities at that time (STEP n12).

Genuine degrees for the respective feature quantities of reflected picture images can be represented by f1 (a1), f2(a2), ..., fm(am), and genuine degrees for the respective feature quantities of transmitted picture images can be represented by g1(b1), g2(b2), ..., gn(bn) (STEP n13).

As a result, a final genuine degree Gr of the license can be defined as a product of these genuine degrees as in the following formula (STEP n14).

$$Gr = \prod_{j=1}^{m} f_j(a_j) \cdot \prod_{j=1}^{n} g_j(b_j)$$

$\{= f_1(a_1) \times f_2(a_2) \times ... \times f_m(a_m) \times g_1(b_1) \times g_2(b_2) ... \times g_n(b_n)\}$

Also, a genuine degree of the license may be discriminated by means of monochromatic light and may be discriminated by means of plural kinds of light sources having different wavelengths.

Since the genuine degree Gr becomes 1 with a genuine document and 0 with a false document, a certain threshold value is set (STEP n15) and the threshold value as set is used to discriminate authenticity. When the genuine degree is greater than the threshold value, the license can be judged to be genuine (STEP n16) and when not so, the license can be judged to be false (STEP n17).

Also, instead of setting such threshold value, a genuine degree may be displayed as a result and an operator may discriminate authenticity on the basis of the resulted value.

With the way to find a genuine degree with the use of the formula 1, a genuine degree for each of feature quantities is completely independent from the other genuine degrees, and the respective genuine degrees are on a level with one another, so that there is an advantage in excellent extendability because in the case of increasing a feature quantity with a view to enhancement in the discriminating performance, a genuine degree can be found by determining only a feature function for the feature quantity and performing a new multiplication thereof.

With such way, duplication of a license by means of a duplicator, a printed matter printed out by outputting a picture image of a license taken in by means of a scanner, or a genuine license, to which characters or a photograph is applied, can be determined to be false.

As described above, feature quantities are found from picture images of a genuine document as picked up, and feature functions are determined from distributions of the feature quantities of the genuine document. Since an arithmetic processing can be realized using that statistical technique, in which genuine degrees are found from the plurality of feature functions thus determined, it is possible to correctly discriminate authenticity of a license under less influence of dispersion in equipment and licenses.

While in the correspondence between the invention and the constitution of the embodiment, a document in the invention corresponds to the license 17 in the embodiment, and likewise a light source corresponds to the light source 15 for transmission and the light source 16 for reflection, photographing means corresponds to the CCD camera 19, calculating means and genuine degree extracting means correspond to the arithmetic processing unit 22, storage means corresponds to the memory unit 21, and output means corresponds to the display unit 23, the invention is applicable on the basis of a technical thought described in the claims and is not limited to only the constitution of the embodiment.

According to the invention, feature functions capable of discriminating authenticity with high accuracy are found whereby it is possible to stably discriminate authenticity with high reliability.

**Claims**

**1.** A document authenticity discriminating apparatus for discriminating authenticity of a document, comprising

plural kinds of light sources having different wavelengths,
pickup means for receiving at least one of transmitted light produced upon transmission of light from the plural kinds of light sources through the document and reflected light produced upon reflection of the light from the document to pick up the document,
calculating means for calculating feature quantities of a plurality of beforehand indicated portions of the document being discriminated, from pickup picture images picked up by light source with the use of the pickup means,

storage means for storing feature functions for extraction of genuine degrees found from those reference feature quantities of a reference document, which are calculated by means of the calculating means, and

genuine degree extracting means for extracting genuine degrees of the document being discriminated, from the feature quantities of the document being discriminated, calculated by the calculating means, and the feature functions beforehand stored in the storage means.

2. A document authenticity discriminating apparatus for discriminating authenticity of a document, comprising

plural kinds of light sources having different wavelengths,

pickup means for receiving both transmitted light produced upon transmission of light from the plural kinds of light sources through the document and reflected light produced upon reflection of the light from the document to pick up the document,

calculating means for calculating feature quantities of a plurality of beforehand indicated portions of the document being discriminated, from pickup picture images picked up by light source with the use of the pickup means,

storage means for storing feature functions for extraction of genuine degrees found from those reference feature quantities of a reference document, which are calculated by means of the calculating means, and

genuine degree extracting means for performing numeric conversion and calculation of genuine degrees by light source from the feature quantities of the document being discriminated, calculated by the calculating means, and the feature functions beforehand stored in the storage means, and multiplying the calculated genuine degrees to extract genuine degrees.

3. The document authenticity discriminating apparatus according to claim 1 or 2, wherein the feature functions are constituted by summing up distributions of reference feature quantities found from a plurality of different reference documents.

4. The document authenticity discriminating apparatus according to claim 1 or 2, further comprising output means for comparing those genuine degrees, which are calculated from the feature quantities of the document being discriminated and the feature functions beforehand stored, with threshold values set from the reference feature quantities beforehand stored in the storage means to output authenticity discriminating results found by such comparison.

5. A method of discriminating authenticity of a document, comprising

plural kinds of light sources having different wavelengths,

pickup step of receiving at least one of transmitted light produced upon transmission of light from the plural kinds of light sources through the document and reflected light produced upon reflection of the light from the document to pick up the document,

calculating step of calculating feature quantities of a plurality of beforehand indicated portions of the document being discriminated, from pickup picture images picked up by light source in the pickup step,

storage step of storing feature functions for extraction of genuine degrees found from those reference feature quantities of a reference document, which are calculated in the calculating step, and

genuine degree extracting step of extracting genuine degrees of the document being discriminated, from the feature quantities of the document being discriminated, calculated in the calculating step, and the feature functions be forehand stored in the storage step.

6. A method of discriminating authenticity of a document, comprising

plural kinds of light sources having different wavelengths,

pickup step of receiving both transmitted light produced upon transmission of light from the plural kinds of light sources through the document and reflected light produced upon reflection of the light from the document to pick up the document,

calculating step of calculating feature quantities of a plurality of beforehand indicated portions of the document being discriminated, from pickup picture images picked up by light source in the pickup step,

storage step of storing feature functions for extraction of genuine degrees found from those reference feature quantities of a reference document, which are calculated the calculating step, and

genuine degree extracting step of performing numeric conversion and calculation of genuine degrees by light source from the feature quantities of the document being discriminated, calculated in the calculating step, and the feature functions beforehand stored in the storage step, and multiplying the calculated genuine degrees to extract genuine degrees of the document being discriminated.

# Fig. 1

11: DOCUMENT AUTHENTICITY DISCRIMINATING APPARATUS

Fig. 2

11: DOCUMENT AUTHENTICITY DISCRIMINATING APPARATUS
15: LIGHT SOURCE FOR TRANSMISSION
16: LIGHT SOURCE FOR REFLECTION
17: LICENSE
19: CCD CAMERA

*Fig. 3*

17: LICENSE

## Fig. 4

```
    ┌──────────────────────────┐
    │ PICTURE IMAGE TAKING-IN  │
    │ PROCESSING               │
    └──────────────────────────┘
                 │
    ┌──────────────────────────┐
    │ LIGHT ONLY LIGHT SOURCE  │──── n1
    │ FOR REFLECTION           │
    └──────────────────────────┘
                 │
    ┌──────────────────────────┐
    │ TAKE IN REFLECTED        │──── n2
    │ PICTURE IMAGE DATA       │
    └──────────────────────────┘
                 │
    ┌──────────────────────────┐
    │ LIGHT ONLY LIGHT SOURCE  │──── n3
    │ FOR TRANSMISSION         │
    └──────────────────────────┘
                 │
    ┌──────────────────────────┐
    │ TAKE IN TRANSMITTED      │──── n4
    │ PICTURE IMAGE DATA       │
    └──────────────────────────┘
                 │
    ┌──────────────────────────┐
    │ AUTHENTICITY DISCRIMI    │──── n5
    │ -NATING PROCESSING       │
    └──────────────────────────┘
                 │
          ┌─────────────┐
          │     END     │
          └─────────────┘
```

# Fig. 5

( A )

( B )

( C )

# Fig. 6

```
   ┌─────────────────────┐
   │   AUTHENTICITY      │
   │   DISCRIMINATING    │
   │   PROCESSING        │
   └─────────────────────┘
             │
   ┌─────────────────────┐
   │ CALCULATE FEATURE   │
   │ QUANTITIES IN       │──── n11
   │ REFLECTED PICTURE   │
   │ IMAGES             │
   │ a_1, a_2, ..., a_m  │
   └─────────────────────┘
             │
   ┌─────────────────────┐
   │ CALCULATE FEATURE   │──── n12
   │ QUANTITIES IN       │
   │ TRANSMITTED PICTURE │
   │ IMAGES             │
   │ b_1, b_2, ..., b_n  │
   └─────────────────────┘
```

n13

RESPECTIVE FEATURE FUNCTIONS OF REFLECTED PICTURE IMAGES $f_1, f_2 ..., f_m$

RESPECTIVE FEATURE FUNCTIONS OF TRANSMITTED PICTURE IMAGES $g_1, g_2 ..., g_n$

CALCULATE GENUINE DEGREE

$$Gr = \prod_{i=1}^{m} f_i(a_i) \cdot \prod_{j=1}^{n} g_j(b_j)$$

n14

n15

GENUINE DEGREE ≥ THRESHOLD VALUE?

NO → FALSE DOCUMENT — n17

YES

GENUINE DOCUMENT — n16

# EP 1 324 283 A1

**European Patent Office**

# EUROPEAN SEARCH REPORT

**Application Number**

EP 02 02 7675

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 6 101 266 A (LASKOWSKI ET AL.) 8 August 2000 (2000-08-08) * column 5, line 54 – column 11, line 27 * * column 21, line 31 – column 24, line 9; figures 1-6,13 * | 1-6 | G07D7/12 |
| A | WO 01 39138 A (ECOLE POLYTECHNIQUE FEDERALE DE LAUSANNE) 31 May 2001 (2001-05-31) * page 8, line 25 – page 12, line 28 * * page 47, line 23 – page 48, line 29; figures 10,17 * | 1,2,5,6 | |
| A | US 4 537 504 A (BALTES ET AL.) 27 August 1985 (1985-08-27) * column 6, line 7 – column 14, line 24; figures 1-12 * | 1,2,5,6 | |
| A | US 5 442 433 A (HOSHINO ET AL.) 15 August 1995 (1995-08-15) * column 2, line 21 – column 3, line 19 * * column 3, line 43 – column 5, line 34; figures 1-4 * | 1,2,5,6 | **TECHNICAL FIELDS SEARCHED (Int.Cl.7)** G07D G06K |
| A | US 4 527 051 A (STENZEL) 2 July 1985 (1985-07-02) * column 3, line 31 – column 7, line 12; figures 1-7 * | 1,2,5,6 | |

The present search report has been drawn up for all claims

| Place of search | Date of completion of the search | Examiner |
|---|---|---|
| THE HAGUE | 14 May 2003 | Rivero, C |

EPO FORM 1503 03.82 (P04C01)

# EP 1 324 283 A1

## ANNEX TO THE EUROPEAN SEARCH REPORT
## ON EUROPEAN PATENT APPLICATION NO.

EP 02 02 7675

This annex lists the patent family members relating to the patent documents cited in the above-mentioned European search report.
The members are as contained in the European Patent Office EDP file on
The European Patent Office is in no way liable for these particulars which are merely given for the purpose of information.

14-05-2003

| Patent document cited in search report | | Publication date | Patent family member(s) | | Publication date |
|---|---|---|---|---|---|
| US 6101266 | A | 08-08-2000 | US | 5923413 A | 13-07-1999 |
| | | | US | 6486464 B1 | 26-11-2002 |
| | | | US | 2002011431 A1 | 31-01-2002 |
| | | | BR | 9713352 A | 06-06-2000 |
| | | | CA | 2271071 C | 10-09-2002 |
| | | | CA | 2387415 A1 | 22-05-1998 |
| | | | EP | 1021788 A2 | 26-07-2000 |
| | | | RU | 2183350 C2 | 10-06-2002 |
| | | | WO | 9821697 A2 | 22-05-1998 |
| WO 0139138 | A | 31-05-2001 | WO | 0139138 A1 | 31-05-2001 |
| | | | AU | 1173500 A | 04-06-2001 |
| | | | EP | 1238373 A1 | 11-09-2002 |
| US 4537504 | A | 27-08-1985 | AT | 9851 T | 15-10-1984 |
| | | | DE | 3166630 D1 | 15-11-1984 |
| | | | EP | 0057271 A2 | 11-08-1982 |
| | | | JP | 1369990 C | 25-03-1987 |
| | | | JP | 57139872 A | 30-08-1982 |
| | | | JP | 61034192 B | 06-08-1986 |
| US 5442433 | A | 15-08-1995 | JP | 5307633 A | 19-11-1993 |
| | | | JP | 3071384 A | 27-03-1991 |
| | | | JP | 3071386 A | 27-03-1991 |
| | | | JP | 2091561 C | 18-09-1996 |
| | | | JP | 3169695 A | 23-07-1991 |
| | | | JP | 7120382 B | 20-12-1995 |
| | | | JP | 3071383 A | 27-03-1991 |
| | | | JP | 2046968 C | 25-04-1996 |
| | | | JP | 3071385 A | 27-03-1991 |
| | | | JP | 7069944 B | 31-07-1995 |
| | | | JP | 2935300 B2 | 16-08-1999 |
| | | | JP | 5073738 A | 26-03-1993 |
| | | | US | 5200794 A | 06-04-1993 |
| | | | EP | 0568186 A2 | 03-11-1993 |
| | | | US | 5291006 A | 01-03-1994 |
| | | | DE | 69027071 D1 | 27-06-1996 |
| | | | DE | 69027071 T2 | 12-12-1996 |
| | | | EP | 0412316 A2 | 13-02-1991 |
| | | | DE | 69232941 D1 | 10-04-2003 |
| | | | EP | 0533448 A2 | 24-03-1993 |
| | | | EP | 0538813 A2 | 28-04-1993 |
| | | | JP | 2055339 C | 23-05-1996 |
| | | | JP | 5334477 A | 17-12-1993 |
| | | | JP | 7082513 B | 06-09-1995 |

EPO FORM P0459

For more details about this annex : see Official Journal of the European Patent Office, No. 12/82

16

## ANNEX TO THE EUROPEAN SEARCH REPORT
## ON EUROPEAN PATENT APPLICATION NO.

EP 02 02 7675

This annex lists the patent family members relating to the patent documents cited in the above-mentioned European search report.
The members are as contained in the European Patent Office EDP file on
The European Patent Office is in no way liable for these particulars which are merely given for the purpose of information.

14-05-2003

| Patent document cited in search report | Publication date | Patent family member(s) | Publication date |
|---|---|---|---|
| US 4527051 A | 02-07-1985 | DE 2829778 A1<br>US 4926031 A<br>DE 2858266 C2<br>US 4982073 A | 17-01-1980<br>15-05-1990<br>29-08-1991<br>01-01-1991 |